# EUROPÄISCHE PATENTANMELDUNG

(11) **EP 1 498 618 A2**
(43) Veröffentlichungstag der Anmeldung: **19.01.2005**
(21) Anmeldenummer: 04016326.3
(22) Anmeldetag: 12.07.2004
(51) Int. Cl.: F16B 25/00, F16B 25/10, F16B 33/00

(54) **Schraube für harte Werkstoffe**

(30) Priorität: 15.07.2003 DE 10333412
(71) Anmelder: Adolf Würth GmbH & Co. KG, 74653 Künzelsau (DE)
(72) Erfinder: Humm, Siegfried, 74214 Schöntal-Westernhausen (DE); Wunderlich, Andreas, 74635 Kupferzell (DE)
(74) Vertreter: Patentanwälte Ruff, Wilhelm, Beier, Dauster & Partner

(57) **Zusammenfassung**

Die Erfindung schlägt eine Schraube vor, deren Schraubenschaft mit einem aufgewalzten Gewinde aus einem korrosionsbeständigen Metall besteht. Im Bereich des vorderen Endes des Schraubenschafts ist eine in der Gewindelinie liegende Ausnehmung eingefräst, in die ein Einsatz aus gehärtetem Metall eingesetzt ist. Dieser Einsatz weist an seiner Außenseite eine mehrere Sägezähne enthaltende in der Gewindelinie liegende Schneidausbildung auf.

## Beschreibung

Die Erfindung geht aus von einer Schraube für harte Werkstoffe. Es sind seit einiger Zeit so genannte Betonschrauben bekannt, die in ein im Mauerwerk oder im Beton vorhandenes Bohrloch direkt eingeschraubt werden können. Es ist ebenfalls bekannt, diese Schrauben aus einem korrosionsbeständigen Material herzustellen, und das Gewinde oder einen Teil des Gewindes oder auch einen Teil der Schraube aus einem gehärteten Material herzustellen, wobei der aus dem gehärteten Material bestehende Teil dann später mit dem Rest der Schraube verbunden wird. Damit soll einerseits die Korrosionsbeständigkeit der Schraube und damit der Verbindung erreicht werden, andererseits aber die größere Härte des nicht korrosionsbeständigen Materials ausgenutzt werden.

Bei einer derartigen Schraube (EP 11 29 297) sind in dem Gewinde einzelne radial in den Schraubenschaft eingesetzte Stifte aus gehärtetem Material vorhanden, die über die Gewindelinie nach außen vorstehen.

Weiterhin ist vorgeschlagen wurden, in eine Einkerbung eines Schraubenschafts eine Zahnstange einzusetzen.

Es ist bereits eine korrosionsfeste Schraube mit mindestens einem Schneideinsatz bekannt (DE 19852338). Bei dieser Schraube weist der Schneideinsatz mehrere an der gleichen Umfangsstelle angeordnete in einer Gewindelinie liegende Schneidköpfe auf. Der Schneideinsatz ist in eine axial verlaufende Nut eingesetzt.

Bei einer weiteren selbst furchenden Schraube (DE 4441716) ist ebenfalls ein aus härterem Material bestehender Schneideinsatz vorhanden, der in eine oder zwei axial verlaufende Nuten eingesetzt ist.

Der Erfindung liegt die Aufgabe zu Grunde, eine für harte Werkstoffe geeignete Schraube vorzuschlagen, die ein schnelles Einschrauben und eine Korrosionsbeständigkeit gewährleistet und die gleichzeitig wirtschaftlich herzustellen ist.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Schraube enthält also einen Schraubenschaft aus korrosionsbeständigem Material mit einem Gewinde, das vorzugsweise einstückig mit dem Schraubenschaft durch Walzen hergestellt ist. Ein Teil des Gewindes wird von einer Schneidausbildung eines Gewindeeinsatzes gebildet, der aus gehärtetem und daher weniger korrosionsbeständigem Material besteht. Dieser Gewindeeinsatz mit seiner Schneidausbildung ist in eine Ausnehmung des Schraubenschafts eingesetzt. Dadurch wird es ermöglicht, dass bei Beginn der Herstellung des Gewindes in der Wandung der Bohrung zunächst die Schneidausbildung aus dem gehärteten Material zum Einsatz kommt, während das dann schon hergestellte Gewinde in der Bohrungswand von dem restlichen aus korrosionsbeständigem Material bestehenden Gewinde belegt wird. Die Ausnehmung ist also im vorderen Bereich des Schraubenschafts vorhanden, so dass das Gewinde des Schraubenschafts mit der Schneidausbildung aus gehärtetem Material beginnt.

Der Gewindeeinsatz kann in Weiterbildung der Erfindung ein Basisteil aufweisen, das zu der Ausnehmung komplementär ist, und an dessen radialer Außenseite die Schneidausbildung ausgebildet ist. Die radiale Außenseite des Basisteils liegt nach Einsetzen des Gewindeeinsatzes in die Ausnehmung in der Fortsetzung der Oberfläche des Schraubenschafts. Die Breite und Form des Basisteils braucht mit der Breite und Form der Schneidausbildung bzw. des restlichen Gewindes nicht übereinzustimmen. Insbesondere kann das Basisteil auch breiter sein als ein Gewindegang, so dass sich erhöhte Festigkeiten ergeben können.

Die Abmessungen von Ausnehmung und Basisteil des Gewindeeinsatzes können so aufeinander abgestimmt sein, dass es möglich ist, den Gewindeeinsatz in die Ausnehmung einzupressen, was dann zu seiner Festlegung ausreichend sein kann. Es ist natürlich auch möglich, die tatsächliche Festlegung auf andere Weise zu ermöglichen oder zu verbessern, beispielsweise durch Löten oder Schweißen.

Die Ausnehmung kann vorzugsweise so ausgebildet sein, dass sie zwei ebene Seitenwände aufweist, die vorzugsweise parallel zueinander verlaufen. Der Boden der Ausnehmung kann so gestaltet sein, dass er im Bereich seiner beiden Enden direkt in die Oberfläche des Schraubenschafts übergeht. Insbesondere kann vorgesehen sein, dass der Boden durchgehend ausgebildet ist, die Ausnehmung also keine Endwände aufweist. Auf diese Weise lässt sich die Ausnehmung mit einfachen Mitteln herstellen.

In nochmaliger Weiterbildung der Erfindung kann vorgesehen sein, dass der Boden auf einer Zylinderfläche liegt, insbesondere einer Kreiszylinderfläche. Es wird daher möglich, die Ausnehmung mit Hilfe eines Scheibenfräsers herzustellen. Dies ist für eine wirtschaftliche Herstellung von Wichtigkeit.

Um eine besonders gute Verankerung des Gewindeeinsatzes zu ermöglichen, kann erfindungsgemäß in Weiterbildung vorgesehen sein, dass die maximale Tiefe der Ausnehmung etwas kleiner ist als der halbe Durchmesser des Schraubenschafts.

Es ist möglich, dass die Längsrichtung der Ausnehmung quer zur Längsachse der Schraube verläuft. Bei entsprechend breiter Ausgestaltung des Gewindeeinsatzes kann auch in diesem Fall die Schneidausbildung sich noch fast über einen halben Umfang erstrecken.

Die Erfindung schlägt aber ebenfalls vor, dass die Längsrichtung der Ausnehmung längs der Gewindelinie verläuft. Die Ausnehmung verläuft dann also schräg zur Längsachse der Schraube.

In nochmaliger Weiterbildung der Erfindung kann die Ausnehmung mindestens eine Seitenausnehmung aufweisen, die zwei vorzugsweise parallele ebene Seitenwände und einen an seinem der Ausnehmung abgewandten Ende in die Oberfläche des Schraubenschafts übergehenden Boden aufweist. Diese Seitenausnehmung kann dazu dienen, eine Verbesserung der Halteeigenschaften zu verwirklichen.

In nochmaliger Weiterbildung der Erfindung kann vorgesehen sein, dass der Gewindeeinsatz mindestens einen seitlichen, vorzugsweise zu der Seitenausnehmung komplementären Ansatz aufweist. Dieser Ansatz kann vorzugsweise etwa in der Mitte der Längserstreckung des Gewindeeinsatzes an diesem ausgebildet sein. Er führt zusammen mit der Seitenausnehmung zu einer auch formschlüssigen Festlegung des Gewindeeinsatzes in dem Schraubenschaft, die auch den erhöhten Beanspruchungen während des Einfurchens des Gewindes in dem harten Material des Mauerwerks beziehungsweise Betons unter allen Umständen Stand hält.

Die Seitenausnehmung kann, ähnlich wie die Ausnehmung selbst, so ausgestaltet sein, dass sie einen durchgehenden Boden aufweist, der vorzugsweise auf einer Kreiszylinderfläche liegt. Die Seitenausnehmung kann daher auch mit Hilfe eines Scheibenfräsers hergestellt werden. Sie ist vorzugsweise weniger tief als die erst genannte Ausnehmung.

Die Schneidausbildung, die an dem Gewindeeinsatz vorhanden ist, kann beispielsweise einzelne Zähne aufweisen, die in der Gewindelinie liegen, gegebenenfalls auch versetzte Zähne.

In Weiterbildung der Erfindung kann vorgesehen sein, dass der Boden der Ausnehmung zur Aufnahme des Gewindeeinsatzes mindestens zwei Abschnitte aufweist, in denen der Boden einen Knick bildet. Die beiden Abschnitte können jeweils für sich eben oder auch leicht gekrümmt sein. Sie bilden jedoch zwei Abschnitte, die winklig zueinander verlaufen. Dadurch kann eine wesentlich bessere Kraftaufnahme in Einschraubrichtung zwischen dem Gewindeeinsatz und dem Schraubenschaft verwirklicht werden. Insbesondere kann der Winkel zwischen den beiden Abschnitten spitz sein.

Nochmals vorteilhafter ist die Weiterbildung, bei der der in Drehrichtung hintere Abschnitt länger ist als der vordere Abschnitt.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine Seitenansicht einer Schraube aus korrosionsbeständigem Material noch ohne einen Gewindeeinsatz;
- Figur 2: schematisch eine perspektivische Ansicht eines Gewindeeinsatzes;
- Figur 3: eine Draufsicht auf eine Abwicklung des Gewindeeinsatzes;
- Figur 4: die Stirnansicht des Gewindeeinsatzes der Figur 3;
- Figur 5: einen Querschnitt durch den Schraubenschaft in einer die Ausnehmung aufweisenden Ebene;
- Figur 6: in vergrößertem Maßstab nochmals eine Ansicht des Endes der Schraube;
- Figur 7: einen Teilschnitt durch das Schraubenende in einer durch die Seitenausnehmung führenden Ebene.
- Figur 8: eine der Figur 4 entsprechende Darstellung eines Gewindeeinsatzes bei einer zweiten Ausführungsform;
- Figur 9: eine perspektivische Ansicht des Gewindeeinsatzes der Ausführungsform nach Figur 8;
- Figur 10: eine Ansicht des Gewindeeinsatzes 28 aus einer Richtung senkrecht zur Schraubenlängsachse;
- Figur 11: einen der Figur 5 entsprechenden Querschnitt durch einen Schraubenschaft der Ausführungsform nach Figur 8 bis 11.

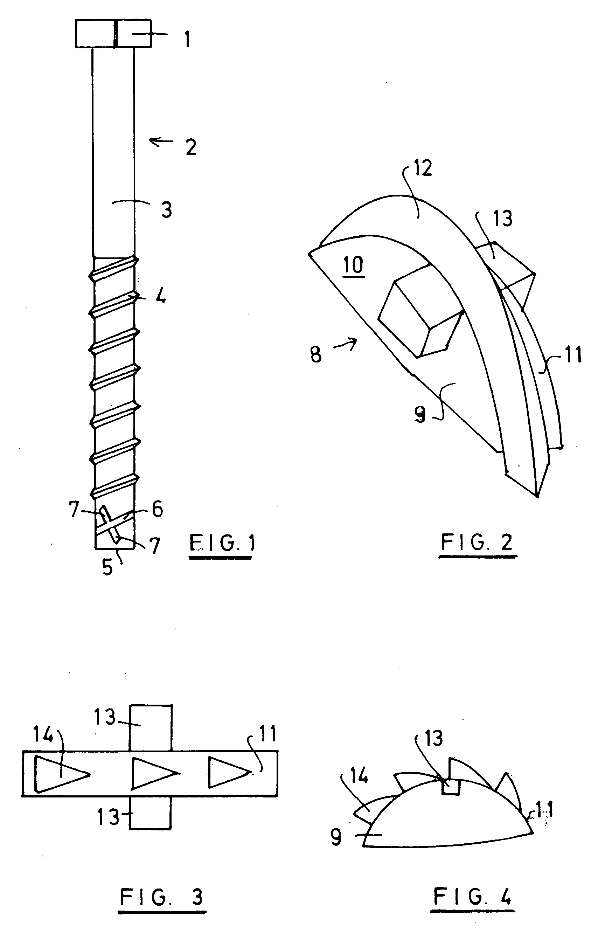

Figur 1 zeigt in einer Seitenansicht eine mit einem Sechskantkopf 1 versehene Betonschraube 2, die einen Schraubenschaft 3 mit einem darauf gewalzten Gewinde 4 aufweist. Dieser Schraubenschaft 3 besteht aus korrosionsbeständigem Metall. Im Bereich des vorderen Endes 5 enthält der Schraubenschaft 3 eine Ausnehmung 6, die in Verlängerung der Schraubenlinie des Gewindes 4 liegt. Die Ausnehmung enthält auf beiden Seiten jeweils eine quer zu ihr verlaufende Seitenausnehmung 7. Die Ausnehmung 6 und die Seitenausnehmung 7 weisen parallele Seitenwände auf, deren Abstand klein ist gegenüber der Länge der Ausnehmung, so dass eine Längsrichtung beider Ausnehmungen definiert ist. In die Ausnehmung 6 in dem vorderen Bereich des Schraubenschafts 3 wird ein Gewindeeinsatz 8 eingesetzt, der in den folgenden Figuren näher dargestellt ist. Zunächst zu Figur 2, die eine vergrößerte perspektivische Ansicht eines solchen Gewindeeinsatzes 8 darstellt. Der Gewindeeinsatz 8 enthält ein Basisteil 9, das zu der Form der Ausnehmung 6 komplementär ist. Dem Boden der Ausnehmung 6 entspricht also eine in Figur 2 nicht zu sehende Unterseite des Basisteils, während die beiden Seitenwände 10 des Basisteils den Seitenwänden der Ausnehmung 6 entsprechen. An der bogenförmigen Außenseite 11 des Basisteils, die mit der zylindrischen Mantelfläche des Schraubenschafts 3 zusammenfällt, ist eine Schneidausbildung 12 ausgebildet, die in der nur schematischen Darstellung der Figur 2 als durchgehendes Gewinde dargestellt ist. Beide Seitenwände 10 des Basisteils 9 enthalten je einen etwa quaderförmigen seitlichen Ansatz 13, der in Form und Größe etwa dem Beginn der Seitenausnehmung 7 entspricht. Die Erstreckung der Ansätze 13 quer zur Längsrichtung der Schneidausbildung 12 ist kürzer als die entsprechende Ausbildung der Seitenausnehmung 7.

Figur 3 zeigt eine Draufsicht auf einer Abwicklung des Gewindeeinsatzes. Die Schneidausbildung enthält im dargestellten Beispiel mehrere einzelne Schneidzähne 14, die auf der bogenförmigen Außenoberfläche 11 des Basisteils 9 angeordnet sind. Die seitlichen Ansätze 13 sind etwa in der Mitte der Längserstreckung des Gewindeeinsatzes angeordnet. Dies geht auch aus Figur 4 hervor, wo vier Schneidzähne 14 dargestellt sind, die sich über die Mantelfläche 11 des Basisteils 9 erstrecken.

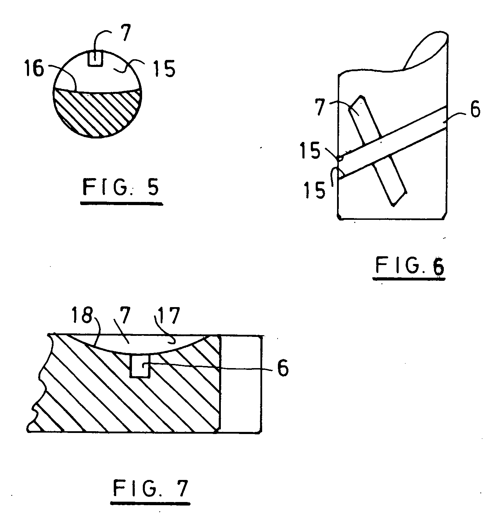

Nähere Einzelheiten der beiden Ausnehmungen ergeben sich aus den Figuren 5 bis 7. Figur 6 zeigt nochmals die Ansicht des vorderen Endes der Schraube in vergrößertem Maßstab. Die Figur 5 zeigt einen Querschnitt durch die Schraube in einer Ebene, die in der Ausnehmung 6 liegt. Die Ausnehmung 6 enthält also, wie bereits erwähnt, zwei parallel zueinander verlaufende ebene Seitenwände 15 und einen Boden 16. Dieser Boden 16, siehe Figur 5, liegt auf einer Zylinderfläche und reicht durchgehend von der Außenseite des Gewindeschafts auf der einen Seite bis zu der Außenseite des Gewindeschafts auf der anderen Seite. Der Boden 16 ist also durchgehend ausgebildet und kann durch relativ einfache Mittel hergestellt werden, beispielsweise wegen der Zylinderform durch einen Scheibenfräser. Er könnte auch geradlinig ausgebildet sein und mit einer Säge hergestellt werden.

Wie man der Figur 5 ebenfalls entnehmen kann, reicht die tiefste Stelle der Ausnehmung bis knapp an den Mittelpunkt des Querschnitts der Schraube. Der Figur 5 ist ebenfalls zu entnehmen, dass die Seitenausnehmung 7 weniger tief ausgebildet ist als die Ausnehmung 6.

Figur 7 zeigt eine Art Längsschnitt durch die Schraube in einer Ebene, die parallel zu den Seitenwänden 17 der Seitenausnehmung 7 verläuft. Auch die Seitenausnehmung 7 kann mit Hilfe eines Scheibenfräsers hergestellt werden und hat daher die in der Figur 7 zu sehende Form mit einem durchgehenden auf einer Kreiszylinderfläche liegenden Boden.

Während die Ausnehmung 6 von dem Basisteil 9 des Gewindeeinsatzes vollständig ausgefüllt wird, reichen die Ansätze 13 nur kurz in die Seitenausnehmung 7, da sie diese nicht vollständig ausfüllen müssen. Für die Funktion der Schraube kann es ausreichen, wenn nur ein einziger solcher seitlicher Ansatz 13 vorhanden ist, vorzugsweise der Ansatz, der in Richtung des Schraubenkopfes angeordnet ist.

Bei der dargestellten Ausführungsform verläuft die Ausnehmung 6 längs der Gewindelinie. Die Ausnehmung 6 könnte auch quer zum Schraubenschaft verlaufen, wenn sie und der zugehörige Basisteil 9 entsprechend breiter ausgebildet sind, so dass auf der Außenseite des Basisteils 9 noch die Schneidausbildung 12 längs einer Gewindelinie angeordnet sein kann.

Der Gewindeeinsatz und die Ausnehmung sind die so bemessen, dass der Gewinde Einsatz in die Ausnehmung eingepresst werden kann und muss. Dies allein kann zu seiner Festlegung ausreichen. Eine zusätzliche Befestigung durch Löten oder dergleichen ist ebenfalls möglich.

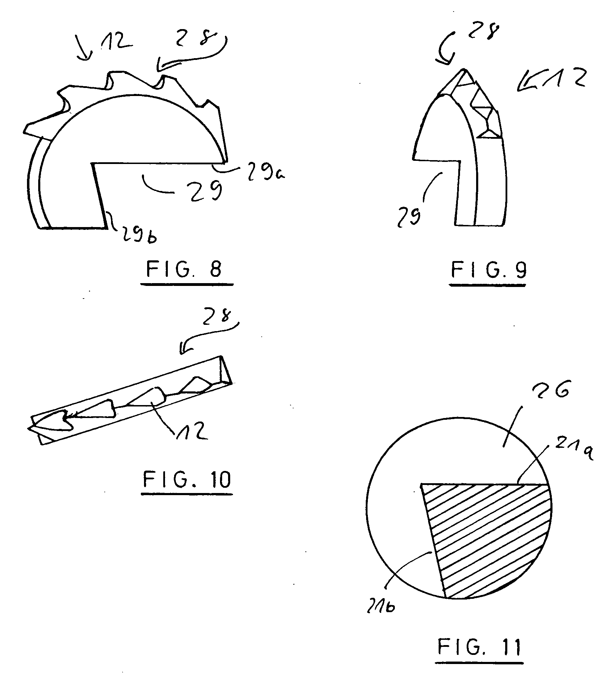

Die Figuren 8 bis 11 zeigen eine zweite Ausführungsform, bei der ein Gewinde Einsatz 28 vorhanden ist, der an seiner Außenseite ebenfalls eine in der Gewindelinie der Schraube liegende Schneidausbildung 12 mit mehreren hintereinander angeordneten Schneidezähnen aufweist.

Während bei der vorhergehend beschriebenen Ausführungsform die dem Boden der Ausnehmung zugewandte Seite des Gewindeeinsatzes eine durchgehende leicht gekrümmte Fläche ist, ist jetzt die dem Schraubenschaft zugewandte Innenseite des Gewindeeinsatzes 28 als Winkel 29 ausgebildet. Demzufolge sieht auch die Ausnehmung 26, siehe Figur 11, anders aus als bei der vorhergehenden Ausführungsform. Bei der vorhergehenden Ausführungsform, siehe Figur 5, ist der Einschnitt bzw. die Ausnehmung 6, die schräg zur Längsachse des Schraubenschafts verläuft, beispielsweise durch einen Fräser hergestellt. Die Ausnehmung 26 bei der Ausführungsform nach Figur 8 bis 11 ist durch zwei unter einem Winkel verlaufende Einschnitte hergestellt, wobei beide Einschnitte beispielsweise durch eine Säge hergestellt sein können. Die Herstellung ist also einfacher als mit einem Fräser. Der Winkel des stehen bleibenden Restes des Querschnitts ist demzufolge spitz. Dadurch wird der Boden 21 der Ausnehmung 26 von zwei Abschnitten 21 a, 21 b gebildet, die beide eben ausgebildet sind und in Längsrichtung der Ausnehmung 26 hintereinander angeordnet sind. Im dargestellten Beispiel schließen sie direkt aneinander an und sind durch eine Kante voneinander getrennt.

Da auch hier der Gewindeeinsatz 28 komplementär zu der Ausnehmung 26 ausgebildet ist, liegen in montiertem Zustand die beiden Abschnitte 29a, 29b der Innenseite des Gewindeeinsatzes 28 flächig und dicht an den entsprechenden Abschnitten 21a, 21b des Bodens 21 der Ausnehmung 26 an. Bei den beim Gewindefurchen in der harten Wand des Bohrlochs auftretenden hohen Kräften in Umfangsrichtung wird hier mit größerer Sicherheit dafür gesorgt, dass der Gewindeeinsatz 28 sich nicht aus der Ausnehmung 26 herausdrängen lässt. Daher können bei dieser Ausführungsform die quer verlaufende Ausnehmung 7, siehe Figur 1, und die entsprechenden Vorsprünge 13, siehe Figur 2 und 3, entfallen.

## Patentansprüche

1. Schraube, insbesondere Betonschraube, mit
1.1 einem Schraubenschaft (3) aus korrosionsbeständigem Metall,
1.2 einem an dem Schraubenschaft (3) ausgebildeten Gewinde (4),
1.3 einem Gewindeeinsatz (8), der
1.3.1 eine in der Gewindelinie liegende Schneidausbildung (12) aufweist,
1.3.2 aus gehärtetem Material besteht und
1.3.3 in einer Ausnehmung (6, 7) des Schraubenschafts (3) eingesetzt ist.

2. Schraube nach Anspruch 1, bei der der Gewindeeinsatz (8) ein zu der Ausnehmung (6) komplementäres Basisteil (9) aufweist, an dessen radialer Außenseite (11) die Schneidausbildung (12) angeordnet ist.

3. Schraube nach Anspruch 1 oder 2, bei der der Gewindeeinsatz (8) in die Ausnehmung (6,7) eingepresst ist.

4. Schraube nach einem der vorhergehenden Ansprüche, bei der die Ausnehmung (6) zwei vorzugsweise parallele ebene Seitenwände (15) und einen durchgehenden Boden (16) aufweist.

5. Schraube nach Anspruch 4, bei der der Boden (16) der Ausnehmung (6) an seinen Enden in die Mantelfläche des Schraubenschafts (3) mündet.

6. Schraube nach Anspruch 4 oder 5, bei der der Boden (16) der Ausnehmung (6) auf einer Zylinderfläche liegt.

7. Schraube nach einem der vorhergehenden Ansprüche, bei der die maximale Tiefe der Ausnehmung (6) etwa dem halben Durchmesser des Schraubenschafts (3) entspricht.

8. Schraube nach einem der vorhergehenden Ansprüche, bei der die Längsrichtung der Ausnehmung (6) quer zur Längsachse der Schraube verläuft.

9. Schraube nach einem der Ansprüche 1 bis 7, bei der die Längsrichtung der Ausnehmung (6) längs einer Gewindelinie verläuft.

10. Schraube nach einem der vorhergehenden Ansprüche, bei der die Ausnehmung (6) mindestens eine Seitenausnehmung (7) aufweist, die zwei vorzugsweise parallele ebene Seitenwände (17) und einen an seinem der Ausnehmung (6) abgewandten Ende in die Oberfläche des Schraubenschafts (3) übergehenden Boden (18) aufweist.

11. Schraube nach einem der vorhergehenden Ansprüche, bei der der Gewindeeinsatz (8) mindestens einen seitlichen vorzugsweise zu der Seitenausnehmung (7) mindestens teilweise komplementären Ansatz (13) aufweist.

12. Schraube nach Anspruch 11, bei der der seitliche Ansatz (13) etwa in der Mitte der Längserstreckung des Gewindeeinsatzes (8) ausgebildet ist.

13. Schraube nach einem der Ansprüche 10 bis 12, bei der der Boden (18) der Seitenausnehmung (7) auf einer Zylinderoberfläche liegt.

14. Schraube nach einem der vorhergehenden Ansprüche, bei der die Schneidausbildung (12) mindestens einen, vorzugsweise mehrere Schneidzähne (14) aufweist.

15. Schraube nach einem der vorhergehenden Ansprüche, bei der der Boden (21) der Ausnehmung (26) mindestens zwei hintereinander angeordnete Abschnitte (21a, 21 b) aufweist, die einen Winkel miteinander einschließen.

16. Schraube nach Anspruch 15, bei der der Winkel zwischen den beiden Abschnitten (21a, 21 b) des Bodens (21) der Ausnehmung (26) spitz ausgebildet ist.

17. Schraube nach Anspruch 15 oder 16, bei der die beiden Abschnitte (21 a, 21 b) des Bodens (21) der Ausnehmung (26) unterschiedlich lang sind.

18. Schraube nach Anspruch 17, bei der der in Drehrichtung hintere Abschnitt (21 a) der beiden Abschnitte (21 a, 21 b) des Bodens (21) der Ausnehmung (26) länger ist als der vordere Abschnitt (21 b).
